# EUROPEAN PATENT APPLICATION

(11) **EP 4 234 513 A1**
(43) Date of publication of application: **30.08.2023**
(21) Application number: 21897976.3
(22) Date of filing: 24.11.2021
(51) Int. Cl.: C04B 35/447, C01B 25/45, C04B 35/45, C04B 35/46

(54) **NEGATIVE THERMAL EXPANSION MATERIAL, COMPOSITE MATERIAL, METHOD FOR MANUFACTURING NEGATIVE THERMAL EXPANSION MATERIAL, AND COMPONENT**

(30) Priority: 30.11.2020 JP 2020198758; 08.07.2021 JP 2021113729
(71) Applicant: National University Corporation Tokai National Higher Education and Research System, Nagoya-shi, Aichi 464-8601 (JP)
(72) Inventor: TAKENAKA, Koshi, Nagoya-shi Aichi 464-8601 (JP); OKAMOTO, Yoshihiko, Nagoya-shi Aichi 464-8601 (JP); YOKOYAMA, Yasunori, Nagoya-shi Aichi 464-8601 (JP); KATAYAMA, Naoyuki, Nagoya-shi Aichi 464-8601 (JP)
(74) Representative: Seemann & Partner Patentanwälte mbB
(86) International application number: PCT/JP2021/042997
(87) International publication number: WO 2022/114004

(57) **Abstract**

A negative thermal expansion material including an oxide represented by one of the general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met), the general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded), and the general formula (3) Ti₂₋ₓMₓO₃ (M includes at least one element selected from Mg, Al, Si, V, Cr, Mn, Fe, Co, Ni, Cu, Zn, Ga, Ge, Zr, Nb, Mo, Ag, In, Sn, Sb, La, Ta, W, and Bi, wherein 0≤x<2 is met) is provided.

## Description

### [TECHNICAL FIELD]

This application is based upon and claims the benefit of priority from a Japanese Patent Application No. 2020-198758, filed on November 30, 2020 and a Japanese Patent Application No. 2021-113729 filed on July 8, 2022, the entire contents of which is incorporated herein by reference.

The present disclosure relates to negative thermal expansion materials, composite materials, methods of manufacturing negative thermal expansion materials, and components made of negative thermal expansion materials.

### [BACKGROUND ART]

Generally, a substance is known to expand thermally with an increase in temperature. However, high levels of recent development in industrial technologies require controlling even thermal expansion, which is a fatalistic aspect of a solid material. A change rate of about 10 ppm (10⁻⁵) in length, which is generally felt to be slight, poses a serious problem in semiconductor device manufacturing in which nanometer-level high precision is required or in the field of precision equipment etc. in which a slight distortion in a component seriously affects the function. Further, in a device comprised of a combination of a plurality of materials, other issues such as boundary separation and electric disconnection may arise due to a difference in thermal expansion between the constituent materials.

Meanwhile, negative thermal expansion materials in which the cell volume decreases with an increase in temperature (i.e., materials having a negative thermal expansion coefficient) are also known. For example, β-Cu_{1.8}Zn_{0.2}V₂O₇ having a monoclinic crystal structure is known to exhibit large negative thermal expansion in an extensive temperature range (see patent literature 1).

[Patent Literature 1] JP2019-210198

### [SUMMARY OF INVENTION]

### [TECHNICAL PROBLEM]

There is a room for further improvement in the aforementioned negative thermal expansion material not only in respect of its property but also in respect of cost of materials included and availability of the materials.

The present disclosure addresses the issue described above, and a purpose thereof is to provide a novel material that exhibits negative thermal expansion.

### [SOLUTION TO PROBLEM]

A negative thermal expansion material according to an aspect of the present disclosure includes an oxide represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met).

### [ADVANTAGEOUS EFFECTS OF INVENTION]

According to the present disclosure, a novel material that exhibits negative thermal expansion is provided.

### [BRIEF DESCRIPTION OF DRAWINGS]

Fig. 1 shows X-ray diffraction patterns of β-Cu₂P₂O₇ and β-Cu₂V₂O₇, and Cu_{1.8}Zn_{0.2}V_{2-y}P_{y}O₇ (y=0_{.}1, 0_{.}2, 0_{.}4, 0.6, 1.0, 2.0);
Fig. 2 shows X-ray diffraction patterns of β-Cu₂P₂O₇ and β-Cu₂V₂O₇, and Cu_{1.8}Zn_{0.2}V_{2-y}P_{y}O₇ (y=1.5, 1.8);
Fig. 3 shows thermal expansion characteristics of Cu_{1.8}Zn_{0.2}V_{2-y}P_{y}O₇;
Fig. 4 shows thermal expansion characteristics of Cu_{1. 5}Zn_{0.5}V_{1.4}P_{0.6}O₇;
Fig. 5 shows thermal expansion characteristics of Cu₂V_{2-y}P_{y}O₇ (x=0.2, 0.6);
Fig. 6 shows X-ray diffraction patterns of Cu_{1.8}Zn_{0.2}V_{1.8}P_{0.2}O₇ (line L9) produced by spray drying;
Fig. 7 shows thermal expansion characteristics of the composite material according to the embodiment;
Fig. 8 shows thermal expansion characteristics of the composite material according to the embodiment;
Fig. 9 shows X-ray diffraction patterns of Zn₂₋ₓMgₓP₂O₇;
Fig. 10 shows X-ray diffraction pattern of Zn₂P_{2-y}A_{y}O₇ (A is one of Sn, Ge, Si, and V);
Fig. 11 shows thermal expansion characteristics of Zn₂₋ₓMgₓP₂O₇ (x=0, 0.2, 0.4, 0.6, 0.8, 2);
Fig. 12 shows thermal expansion characteristics of Zn₁.₆₄Mg₀. ₃Al₀.₀₆P₂O₇;
Fig. 13 shows thermal expansion characteristics of Zn₂P_{2-y}A_{y}O₇ (x=0.1, A is one of Sn and Si);
Fig. 14 shows X-ray diffraction patterns of Ti₂₋ₓMₓO₃ (M is one of Mn, Cr, V, Si, Ta, Nb, and Zr);
Fig. 15 shows thermal expansion characteristics of Ti₂₋ₓMₓO₃ (M is one of Cr and Nb) ;
Fig. 16 shows thermal expansion characteristics of Ti₂₋ₓMₓO₃ (M is one of Si and Al) ; and
Fig. 17 shows colors of Cu_{1.8}Zn_{0.2}V_{2-y}P_{y}O_{7.}

### [DESCRIPTION OF EMBODIMENTS]

We have focused on Cu₂V₂O₇-based materials as candidates of substances that exhibit negative thermal expansion. α-Cu₂V₂O₇ having an orthorhombic crystal structure has attracted interest as a multiferroic substance in which ferroelectricity and weak paramagnetic property coexist. In a relatively extensive temperature range inclusive of and higher than room temperature, however, anisotropical thermal deformation of crystal lattices, which is considered to be caused by dielectric instability, is observed. As a result, negative thermal expansion characterized by contraction of unit cell volumes is exhibited in an extensive temperature range with an increase in temperature.

By substituting for various elements, Cu₂V₂O₇ could be in a monoclinic β phase or a triclinic γ phase as well as in an orthorhombic α phase. We have found that a negative thermal expansion property at a level that cannot be achieved in related-art α-Cu₂V₂O₇-based materials is exhibited when a portion of the Cu site or the V site is replaced by another element and have devised negative thermal expansion materials illustrated below.

We have also focused on Zn₂P₂O₇-based materials as further candidates of substances that exhibit negative thermal expansion. In the case of Zn₂P₂O₇, the α phase of monoclinic I2/c is stable at a low temperature, and the β phase of monoclinic C2/m is stable at a high temperature. With an increase in temperature, Zn₂P₂O₇ exhibits a transition accompanying large contraction of 1.68% at about 405K (calculated from the lattice constant). We have found that negative thermal expansion is exhibited when a portion of the Zn site or the P site is replaced by another element and have devised negative thermal expansion materials illustrated below.

We have also focused on Ti₂O₃-based materials as further candidates of substances that exhibit negative thermal expansion. Corundum Ti₂O₃ is stable at ordinary temperature and ordinary pressure, is hexagonal (R3̅c), and is formed by honeycomb lattice layers. Ti₂O₃ is also a Mott-Hubbard insulator exhibiting metal-to-insulator transition at 400-600K, and the unit cell exhibits positive anisotropical thermal expansion at the time of transition. We have found that negative thermal expansion is exhibited when a portion of the Ti site is replaced by another element and have devised negative thermal expansion materials illustrated below.

The negative thermal expansion material according to an aspect of the present disclosure includes an oxide represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met).

According to this aspect, it is possible to provide a novel inexpensive negative thermal expansion material while also maintaining certain negative thermal expansion property, by replacing relatively expensive V by relatively inexpensive P.

The linear thermal expansion coefficient of the oxide at 400K may be -10 ppm/K or lower.

x in the general formula (1) may be 0.1-1.6. More preferably, x is 0.1-1.0. This makes it possible to realize a negative linear thermal expansion coefficient having a larger absolute value than the linear thermal expansion coefficient of α-Cu₂V₂O₇ in which Cu is not replaced by R.

y in the general formula (1) may be 0.1-1.8. More preferably, y is 0.1-1.2. This makes it possible to provide a negative thermal expansion material less expensive than Cu₂₋ₓRₓV₂O₇ in which V is not replaced by P.

The oxide may include a monoclinic β phase.

At least one of an oxide having a monoclinic crystal system or an oxide having an orthorhombic crystal system may be included. Alternatively, the oxide may have a crystal structure having a space group selected from C2/c, C2/m, and Fdd2.

The negative thermal expansion material may exhibit negative thermal expansion in a temperature range 100-500K.

The linear thermal expansion coefficient of the negative thermal expansion material may be -10 ppm/K or lower in a temperature range 100-500K.

The color of the negative thermal expansion material may be changed by changing y in the general formula (1). This aspect can be used in controlling thermal expansion of a paint, etc.

The negative thermal expansion material according to another aspect of the present disclosure includes an oxide represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded).

According to this aspect, it is possible to provide a novel inexpensive negative thermal expansion material exhibiting large negative thermal expansion near room temperature.

In the general formula (2), oxides in which x=0, 0<y<2, and A=V may be excluded.

x in the general formula (2) may be 0.1-1.6.

y in the general formula (2) may be 0.1-1.6.

The negative thermal expansion material may exhibit negative thermal expansion in a temperature range 200-400K.

The linear thermal expansion coefficient of the negative thermal expansion material may be -10 ppm/K or lower in a temperature range 200-400K.

The negative thermal expansion material according to still another aspect of the present disclosure includes an oxide represented by a general formula (3) Ti₂₋ₓMₓO₃ (M includes at least one element selected from Mg, Al, Si, V, Cr, Mn, Fe, Co, Ni, Cu, Zn, Ga, Ge, Zr, Nb, Mo, Ag, In, Sn, Sb, La, Ta, W, and Bi, wherein 0≤x<2 is met).

According to this aspect, it is possible to provide a novel inexpensive negative thermal expansion material.

x in the general formula (3) may meet 0<x≤1.6. More preferably, x is 0.05-1.6, and, still more preferably, 0.1-1.0.

The negative thermal expansion material may exhibit negative thermal expansion in a temperature range 100-500K.

The linear thermal expansion coefficient of the negative thermal expansion material may be -10 ppm/K or lower in a temperature range 100-500K.

Another aspect of the present disclosure relates to a composite material. The composite material in this case includes a negative thermal expansion material and a positive linear expansion material having a positive linear thermal expansion coefficient. In this way, a composite material in which volume change with respect to temperature change is suppressed is realized.

Still another aspect of the present disclosure relates to a method of manufacturing a negative thermal expansion material. The method of manufacturing includes preparing an aqueous solution that contains a chemical compound material represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) and contains an organic acid.

Still another aspect of the present disclosure also relates to a method of manufacturing a negative thermal expansion material. The method of manufacturing includes preparing an aqueous solution that contains a chemical compound material represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded) and contains an organic acid.

Still another aspect of the present disclosure relates to a component. The component includes a negative thermal expansion material or a composite material including a negative thermal expansion material and a positive thermal expansion material. In this way, a component in which volume change with respect to temperature change is suppressed can be realized.

Hereinafter, embodiments to implement the present disclosure will be described in detail with reference to the drawings, etc.

### [First embodiment]

The solid-phase reaction method was used to prepare a sample of polycrystalline sintered object (ceramics) of Cu₂₋ₓRₓV_{2-y}P_{y}O₇ (R is Zn). More specifically, CuO, ZnO, V₂O₃ or V₂O₅, (NH₄) ₂HPO₄ or (NH₄)H₂PO₄ that were stoichiometrically weighed were mixed in the atmosphere for one hour by using an agate mortar and a pestle. Subsequently, the mixed powder was pressed into a pellet and heated for 10 hours in the atmosphere at a temperature 873-953K. The powder thus obtained was sintered by using a spark plasma sintering (SPS) machine (from SPS Syntex Inc.) to obtain an oxide sintered object. Sintering was performed at 723K for five minutes in a vacuum (<10⁻¹Pa) by using a graphite die. The starting material may not be limited to those described above, and P₂O₅, Zn₂P₂O₇, Cu₂P₂O₇, etc. can be used. A sintered object is obtained by sintering a material and can take any of various forms such as powder, agglomerated powder worked into a predetermined shape, etc.

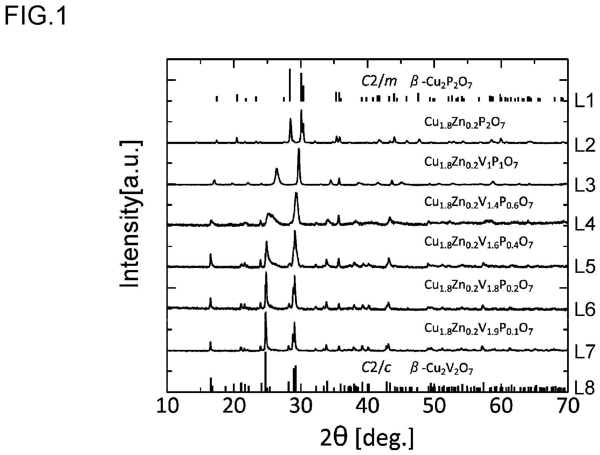

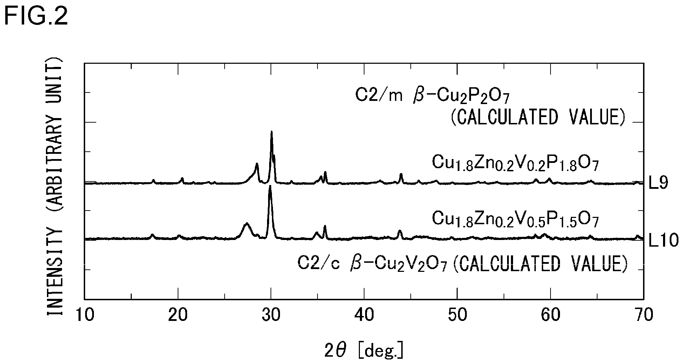

Subsequently, the crystal structure of each sample was evaluated by using the powder X-ray diffraction (XRD) method (measurement temperature 295K, characteristic X-ray of CuKα: wavelength λ=0.15418 nm) and the radiated light change X-ray diffraction method (wavelength λ=0.06521 nm). Fig. 1 shows X-ray diffraction patterns of β-Cu₂P₂O₇ and β-Cu₂V₂O₇, and Cu_{1.8}Zn_{0.2}V_{2-y}P_{y}O₇ (y=0.1, 0.2, 0.4, 0.6, 1.0, 2.0). Fig. 2 shows X-ray diffraction patterns of β-Cu₂P₂O₇ and β-Cu₂V₂O₇, and Cu_{1.8}Zn_{0.2}V_{2-y}P_{y}O₇ (y=1.8, 1.5). The X-ray diffraction patterns of β-Cu₂P₂O₇ and β-Cu₂V₂O₇ are calculated values.

As shown in Figs. 1 and 2, β-Cu₂P₂O₇ (line L1) represents an oxide sintered object corresponding to a high-temperature phase and has a monoclinic crystal structure having a space group C2/m. Meanwhile, β-Cu₂V₂O₇ (line L8) also represents an oxide sintered object corresponding to a high-temperature phase but has a monoclinic crystal structure having a space group C2/c. All of the oxide sintered objects could have a crystal structure having a space group C2/c, C2/m, or Fdd2 by replacing certain elements or being manufactured by a different method.

Further, as shown in Figs. 1 and 2, Cu_{1.8}Zn_{0.2}V_{2-y}P_{y}O₇ (lines L2-L7, line L9, line L10), in which a portion of Cu is replaced by Zn, also has a β phase (monoclinic) crystal structure. In other words, it is expected that a β phase, which could not be in existence steadily in a composition Cu₂V₂O₇ unless at a high temperature (977K or higher), can be in existence steadily in an extensive temperature range including room temperature, by configuring R to include an element that replaces Cu and by replacing a portion of V by P in the general formula (1) Cu₂₋ₓRₓV_{2-y}P_{y}O₇. In the negative thermal expansion material according to this embodiment, the oxide included may not necessarily be a monoclinic crystal, and at least one of an oxide having a monoclinic crystal system or an oxide having an orthorhombic crystal system may be included.

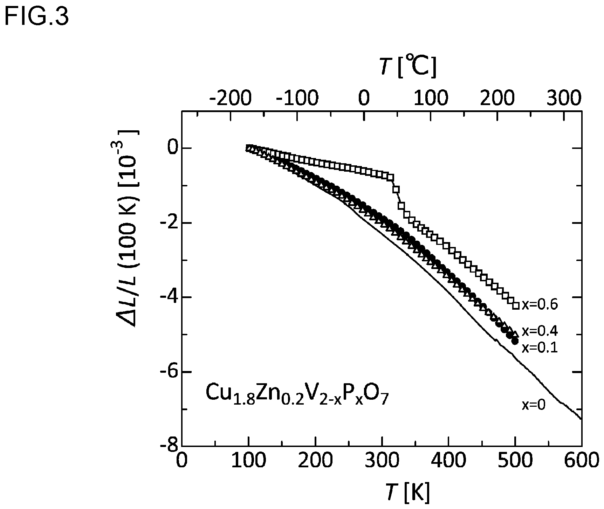

Fig. 3 shows thermal expansion characteristics of β-Cu_{1.8}Zn_{0.2}V_{2-y}P_{y}O₇. The vertical axis represents a length change ΔL/L with reference to the length L at 100K. The length change was calculated by using a linear thermal expansion coefficient α calculated by using a laser thermal expansion meter (LIX-2:N from ULVAC, Inc.) (measurement temperature range 100-500K).

As shown in Fig. 3, negative thermal expansion is exhibited in a temperature range 100-500K in the case the value of y, indicating the proportion of P replacing V in β-Cu_{1.8}Zn_{0.2}V_{2-y}P_{y}O₇, is 0.1, 0.4, 0.6. The linear thermal expansion coefficient is -10 ppm/K at least at 400K. When the value of y is 0.1 or 0.4, in particular, the linear thermal expansion coefficient will be -10 ppm/K in the temperature range 100-500K, showing that large negative thermal expansion is exhibited in an extensive temperature range including room temperature.

In this embodiment, Zn is described by way of example as an element to replace Cu. It will be expected, however, negative thermal expansion will also be exhibited when a portion of Cu is replaced by an element such as Mg, Al, Si, Ti, Cr, Mn, Fe, Co, Ni, Sn, etc.

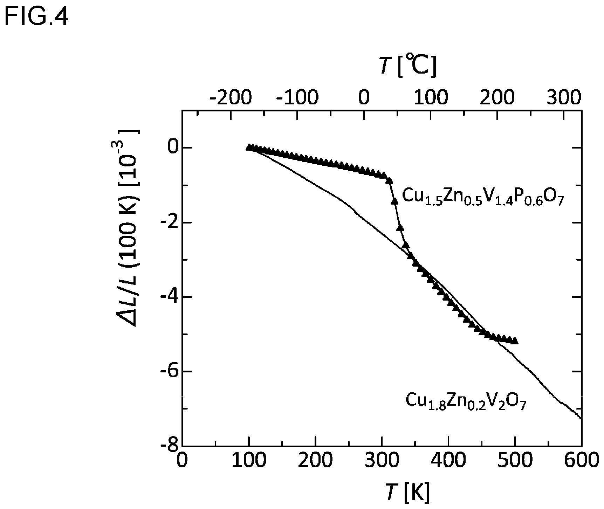

A description will now be given of an impact of the proportion of Zn that replaces Cu. Fig. 4 shows thermal expansion characteristics of Cu_{1.5}Zn_{0.5}V_{1.4}P_{0.6}O₇. As shown in Fig. 4, negative thermal expansion is exhibited in the temperature range 100-500K equally in the case the value of x, indicating the proportion of Zn replacing Cu, is 0.5. The linear thermal expansion coefficient is -10 ppm/K at least at 400K. The proportion of x of the element R that replaces Cu may be 0.1-1.6. More preferably, x is 0.1-1.0. In this way, a negative linear thermal expansion coefficient having a larger absolute value than the linear thermal expansion coefficient of α-Cu₂VO₇, in which Cu is not replaced by the element R, is realized.

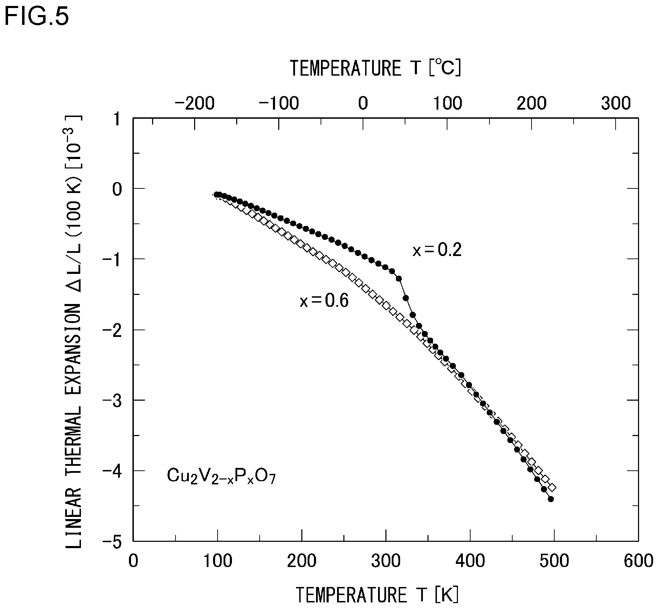

Fig. 5 shows thermal expansion characteristics of Cu₂V_{1.8}P_{0.2}O₇ and Cu₂V_{1.4}P_{0.6}O₇. As shown in Fig. 5, negative thermal expansion is exhibited in a temperature range 100-500K equally in the case Cu is not replaced and V is replaced by P. The linear thermal expansion coefficient is -10 ppm/K at least at 400K.

As described above, the negative thermal expansion material according to this embodiment is an oxide sintered object represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met). According to this embodiment, it is possible to provide a novel inexpensive negative thermal expansion material while also maintaining certain negative thermal expansion property, by replacing relatively expensive V by relatively inexpensive P. y in the general formula (1) may be 0.1-1.8. More preferably, y is 0.1-1.2. This makes it possible to provide a negative thermal expansion material less expensive than Cu₂₋ₓRₓV₂O₇ in which V is not replaced by P.

### [Second embodiment]

The spray-drying method was used to produce a polycrystalline sintered object (ceramics) sample of β-Cu_{1.8}Zn_{0.2}V_{2-y}P_{y}O₇. More specifically, 3 g of anhydrous citric acid and 100 ml of pure water were added to 1 g of the sample powder of Cu₂₋ₓZnxV_{2-y}P_{y}O₇ obtained by the solid-phase reaction method, and the solution was stirred by using a magnetic stirrer until the sample powder is dissolved completely.

Subsequently, the aqueous solution thus obtained was subject to spray drying at a spraying rate of 2 ml/min and a temperature of 150°C by using a spray drier (Yamato Scientific co., ltd.: ADL-311SA) to obtain a citrate powder. The powder was put into an alumina crucible to decompose the citric acid by heating the powder in the atmosphere for 5-10 hours at 673K. The product obtained was crushed hard in a mortar to mold it into a pellet which was put into an alumina crucible and calcinated for 2-10 hours in the atmosphere of 873-953K by using an electric furnace.

Organic acid such as acetic acid may be used in place of citric acid mentioned above. Alternatively, the materials may be mixed in a molar ratio and then directly mixed with citric acid to produce an aqueous solution. The concentration of aqueous citric acid solution and conditions for spray drying may not be limited to those described above. The step of decomposing the citric acid and the step of chemical reaction may be performed in succession. Alternatively, spray drying through the final chemical reaction may be performed in sequential steps.

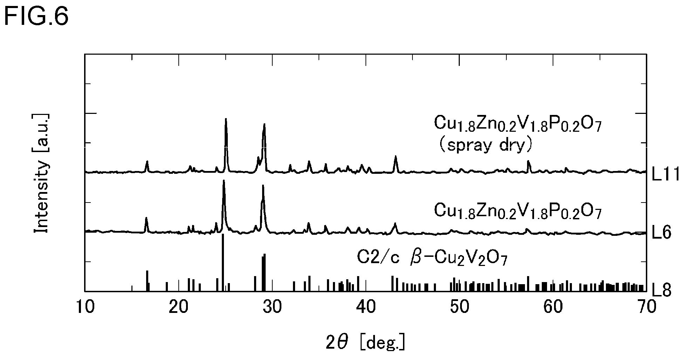

Fig. 6 shows X-ray diffraction patterns of Cu_{1.8}Zn_{0.2}V_{1.8}P_{0.2}O₇ (line L11) produced by spray drying. The pattern indicated by line L11 shows the crystal structure identical to that of Cu_{1.8}Zn_{0.2}V_{1.8}P_{0.2}O₇ (line L6) produced by the solid-phase reaction method.

By optimizing the calcination conditions, therefore, a large linear thermal expansion coefficient equivalent to that of β-Cu_{1.8}Zn_{0.2}V_{1.8}P_{0.2}O₇ manufactured by using the solid-phase reaction method can be obtained in β-Cu_{1.8}Zn_{0.2}V_{1.8}P_{0.2}O₇ manufactured by using the spray drying method, or at least a linear thermal expansion coefficient equivalent to or higher that of α-Cu₂V₂O₇ known in the related art can be obtained.

As described above, the method of manufacturing a negative thermal expansion material by the spray drying method includes preparing an aqueous solution that contains a chemical compound material represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) and contains an organic acid. According to this manufacturing method, a negative thermal expansion material having a negative linear thermal expansion coefficient of a larger absolute value than the linear thermal expansion coefficient of α-Cu₂V₂O₇, in which Cu is not replaced by Zn, can be manufactured relatively inexpensively by using a form of aqueous solution characterized by low temperature and ease of use. Further, a less expensive negative thermal expansion material can be provided because a portion of V can be replaced by P.

The manufacturing method described above includes steps of using an aqueous solution for spray drying to dry, granulate, and produce an organic acid base powder. In this way, an organic acid base powder can be manufactured without requiring excessive energy and expensive apparatuses for, for example, granulation and pulverization at a high temperature.

Further, the manufacturing method described above includes steps of heating an organic acid base powder, decomposing the organic acid, and calcinating the powder in which the organic acid is decomposed to produce an oxide sintered object. In this way, an oxide sintered object of a desired shape can be produced with relatively low energy.

As described above, the negative thermal expansion material manufactured by the manufacturing method according to this embodiment has a substantially constant linear thermal expansion coefficient with respect to temperature change in an extensive temperature range of 100-about 500K so that it is easy to design the functionality of the material. The embodiment also provides industrial benefits such as inexpensive elements such as Cu, Zn, and P mainly forming the material, low synthesis temperature of oxides, easy of manufacturing, and availability of fine particles.

### [Third embodiment]

A description will be given of a composite material that includes a negative thermal expansion material represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) and includes a positive thermal expansion material such as resin and metal having a positive linear thermal expansion coefficient.

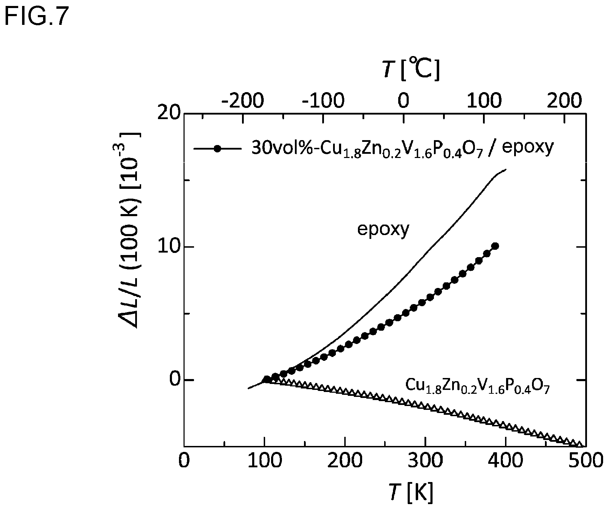

Fig. 7 shows thermal expansion characteristics of the composite material according to the embodiment. The composite material shown in Fig. 7 is comprised of a mixture of 30 vol% of Cu_{1.8}Zn_{0.2}V_{1.6}P_{0.4}O₇ having a linear thermal expansion coefficient α of -10 ppm/K or higher and 70 vol% of epoxy resin having a linear thermal expansion coefficient α of 60 ppm/K. As shown in Fig. 7, thermal expansion (volume change) of the composite material according to this embodiment with respect to temperature change is more heavily suppressed than in the case of epoxy resin alone. A resin material such as engineering plastic, polyvinyl butyral resin, and phenol resin or a metal material such as aluminum may be included instead of epoxy resin.

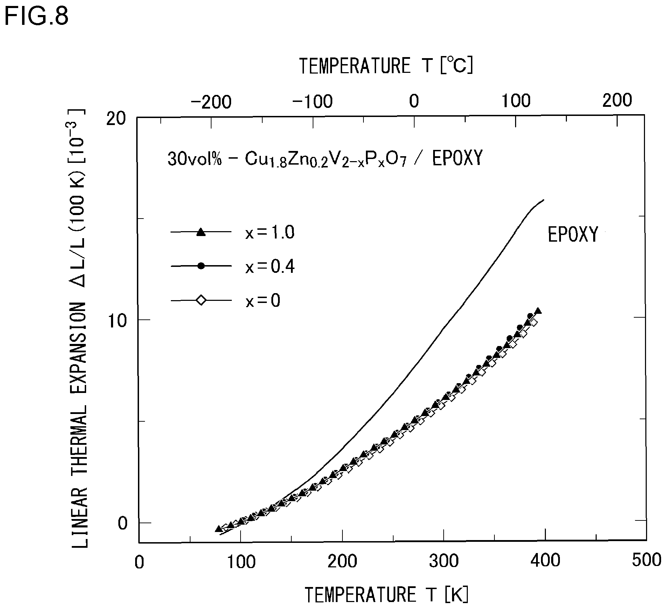

Fig. 8 also shows thermal expansion characteristics of the composite material according to the embodiment. Of the three composite materials shown in Fig. 8, one is the composite material shown in Fig. 7. Another is comprised of a mixture of 30 vol% of Cu_{1.8}Zn_{0.2}V_{1.0}P_{1.0}O having a linear thermal expansion coefficient α of -10 ppm/K or higher and 70 vol% of epoxy resin having a linear thermal expansion coefficient α of 60 ppm/K. The other is comprised of a mixture of 30 vol% of Cu_{1.8}Zn_{0.2}VO and 70 vol% of epoxy resin having a linear thermal expansion coefficient α of 60 ppm/K. Thermal expansion (volume change) of the composite material according to this embodiment shown in Fig. 8 with respect to temperature change is more heavily suppressed than in the case of epoxy resin alone.

### [Fourth embodiment]

The solid-phase reaction method was used to produce a polycrystalline sintered object (ceramics) sample of Zn₂₋ₓTₓP₂O₇ (T is Mg). More specifically, ZnO, MgO, (NH₄)₂HPO₄ or (NH₄)H₂PO₄ that are stoichiometrically weighed were mixed in the atmosphere for one hour by using an agate mortar and a pestle. Subsequently, the mixed powder was pressed into a pellet and heated for 2-10 hours in the atmosphere at a temperature 1023-1173K. When the sample was sintered insufficiently, the sample obtained was crushed in the atmosphere by using an agate mortar and a pestle to turn it into a powder, which was calcinated again or sintered by using a spark plasma sintering (SPS) machine (from SPS Syntex Inc.). SPS sintering was performed at 823-1023K for five minutes in a vacuum (<10⁻¹Pa) by using a graphite die. The starting material may not be limited to those described above, and P₂O₅, Zn₂P₂O₇, Mg₂P₂O₇, etc. can be used. When a portion of P is replaced by T (e.g., V), a powder of T alone or an oxide of T such as V₂O₅ can be used as the starting material.

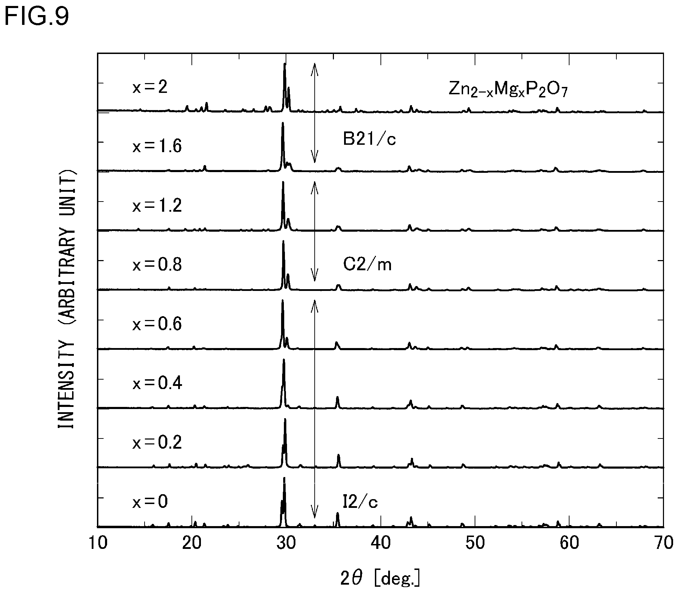

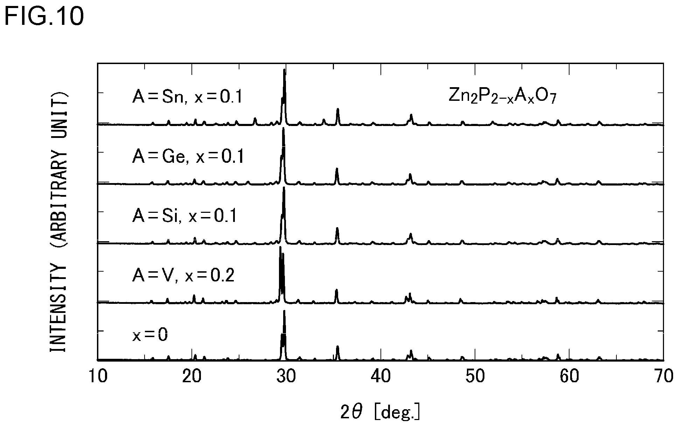

Subsequently, the crystal structure of each sample was evaluated by using the powder X-ray diffraction (XRD) method (measurement temperature 295K, characteristic X-ray of CuKα: wavelength λ=0.15418 nm) and the radiated light change X-ray diffraction method (wavelength λ=0.06521 nm). Fig. 9 shows X-ray diffraction patterns of Zn₂₋ₓMgₓP₂O₇. Fig. 10 shows X-ray diffraction patterns of Zn₂P_{2-y}A_{y}O₇ (A is one of Sn, Ge, Si, and V).

As shown in Fig. 9, it is confirmed that Zn₂₋ₓTₓP₂O₇ (T is Mg) is obtained as a single-phase sample in the entire composition range between x=0 and x=2. At room temperature, x=0, 0.2, 0.4, 0.6 results in a crystal structure having a space group I2/c, x=0.8, 1.2 results in a crystal structure having a space group C2/m, and x=1.6, 2 results in a crystal structure having a space group B21/c.

As shown in Fig. 10, it is demonstrated that the main component of Zn₂P_{2-y}A_{y}O₇ (A is one of Sn, Ge, Si, and V) has a crystal structure having the same space group as Zn₂P₂O₇, indicating that A could be any of various elements.

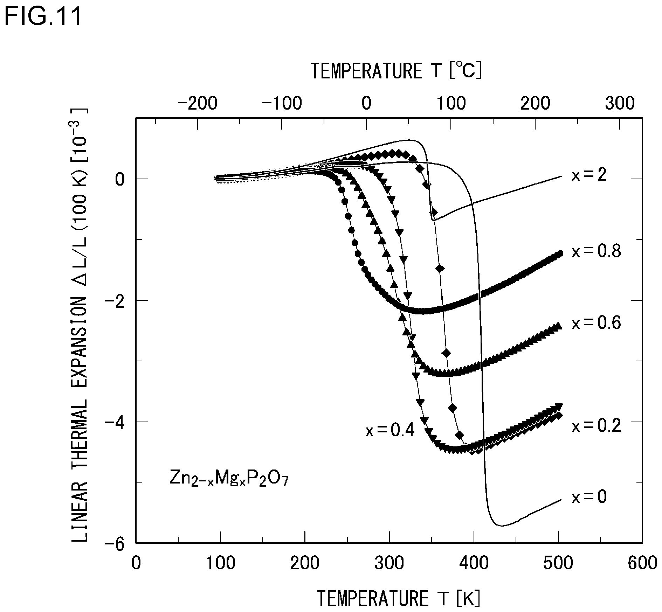

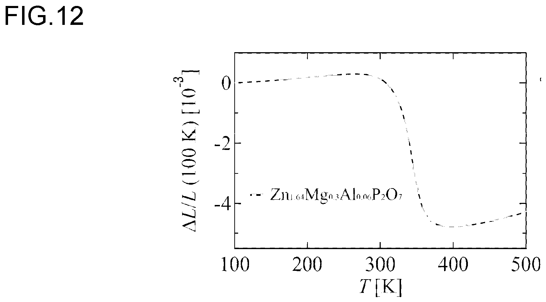

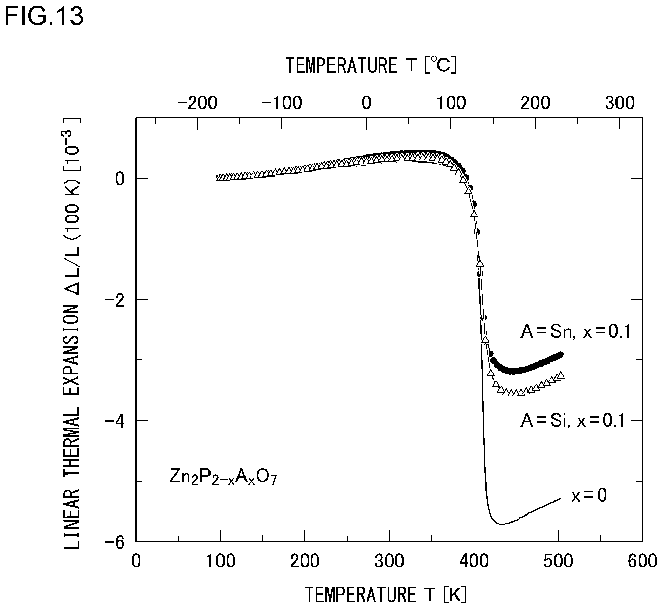

Fig. 11 shows thermal expansion characteristics of Zn₂₋ₓMgₓP₂O₇ (x=0, 0.2, 0.4, 0.6, 0.8, 2) . Fig. 12 shows thermal expansion characteristics of Zn_{1.64}Mg_{0.3}Al_{0.06}P₂O₇. Fig. 13 shows thermal expansion characteristics of Zn₂P_{2-y}A_{y}O₇ (x=0.1, A is one of Sn and Si) In all of Figs. 11-13, the vertical axis represents a length change ΔL/L with reference to the length L at 100K. The length change was calculated by using a linear thermal expansion coefficient α calculated by using a laser thermal expansion meter (LIX-2:N from ULVAC, Inc.) (measurement temperature range 100-500K).

As shown in Fig. 11, negative thermal expansion is exhibited in a temperature range 200-400K in the case the value of x, indicating the proportion of Mg replacing Zn in Zn₂₋ₓMgₓP₂O₇, is 0.2, 0.4, 0.6, 0.8. It is demonstrated that large negative thermal expansion is exhibited in an extensive temperature range including room temperature particularly when the value of x is 0.6 or 0.8.

In this embodiment, Mg is described by way of example as an element to replace Zn. It will be expected, however, negative thermal expansion will also be exhibited when a portion of Zn is replaced by an element such as Al, Si, Ti, V, Cr, Mn, Fe, Co, Ni, Cu, Ga, Ge, Zr, Nb, Mo, Ag, In, Sn, Sb, La, Ta, W, Bi. For example, Zn_{1.64}Mg_{0.3}Al_{0.06}P₂O₇, in which a portion of Zn is replaced by Mg and Al, also exhibits negative thermal expansion as shown in Fig. 12.

As shown in Fig_{.} 13, Zn₂P_{2-y}A_{y}O₇ (A is one of Sn and Si) exhibits negative thermal expansion near 400K.

The negative thermal expansion material according to this embodiment is an oxide sintered object represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded). This makes it possible to provide a novel inexpensive negative thermal expansion material exhibiting large negative thermal expansion near room temperature. x in the general formula (2) may be 0.1-1.6. More preferably, y is 0.5-1.0. This makes it possible to provide a less expensive negative thermal expansion material.

### [Fifth embodiment]

A sample of polycrystalline sintered object (ceramics) of Zn₂₋ₓTₓP₂O₇ (T is Mg) was produced by the spray drying method as shown in the second embodiment. The method of manufacturing a negative thermal expansion material according to this embodiment includes preparing an aqueous solution that contains a chemical compound material represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded) and contains an organic acid. According to this manufacturing method, a negative thermal expansion material having a negative linear thermal expansion coefficient of a large absolute value can be manufactured relatively inexpensively by using a form of aqueous solution characterized by low temperature and ease of use.

### [Sixth embodiment]

The solid-phase reaction method was used to produce a polycrystalline sintered object (ceramics) sample of Ti₂₋ₓMₓO₃ (M is one of Al, Mn, Cr, V, Si, Ta, Nb, and Zr). More specifically, a powder of TiO₂, Ti, M stoichiometrically weighed was mixed in the atmosphere or in a glove box for one hour by using an agate mortar and a pestle. Subsequently, the mixed powder was pressed into a pellet, vacuum sealed (<10⁻³Pa) in a quartz tube, and heated for 20-50 hours at a temperature 1223-1323K. When the sample was sintered insufficiently, the sample obtained was crushed in the atmosphere or in a glove box by using an agate mortar and a pestle to turn it into a powder, which was sintered by using a spark plasma sintering (SPS) machine (from SPS Syntex Inc.). Sintering was performed at 1173K for 2-5 minutes in a vacuum (<10⁻¹Pa) by using a graphite die. The starting material may not be limited to those described above, and Cr₂O₃, etc. can be used.

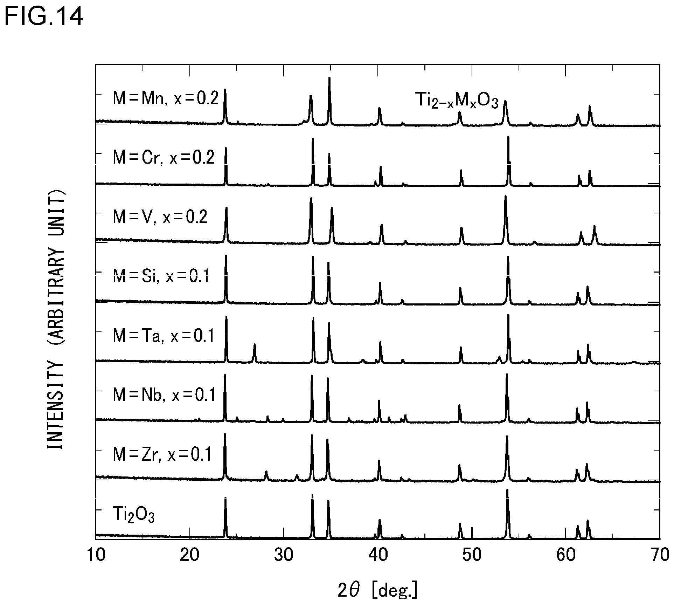

Subsequently, the crystal structure of each sample was evaluated by using the powder X-ray diffraction (XRD) method (measurement temperature 295K, characteristic X-ray of CuKα: wavelength λ=0.15418 nm) and the radiated light change X-ray diffraction method (wavelength λ=0.06521 nm). Fig. 14 shows X-ray diffraction patterns of Ti₂₋ₓMₓO₃ (M is one of Mn, Cr, V, Si, Ta, Nb, and Zr).

As shown in Fig. 14, it is demonstrated that the main component of Ti₂₋ₓMₓO₃ (M is one of Mn, Cr, V, Si, Ta, Nb, and Zr) has a crystal structure having the same space group as Ti₂O₃, indicating that M could be any of various elements.

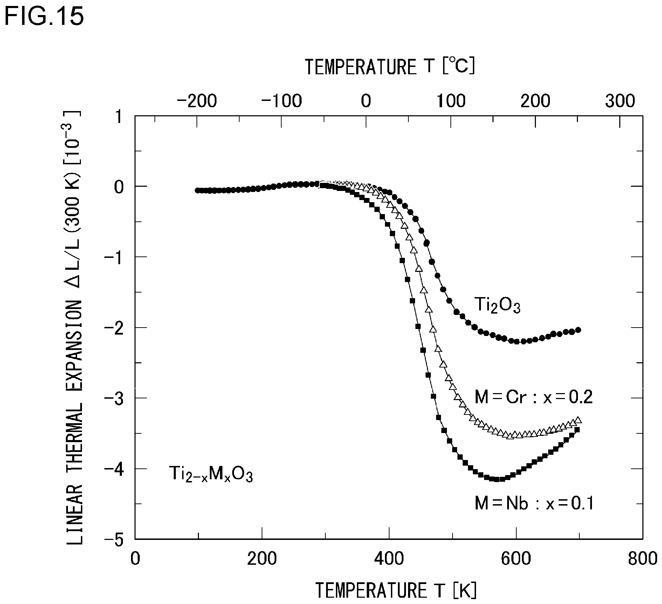

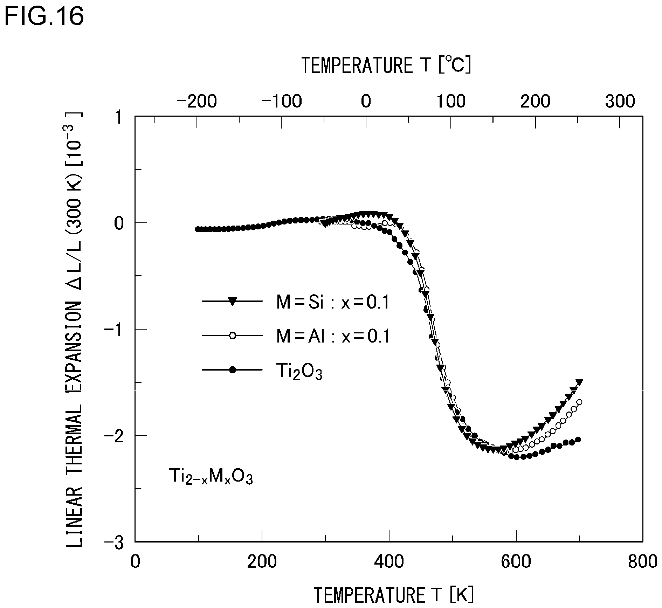

Fig. 15 shows thermal expansion characteristics of Ti₂₋ₓMₓO₃ (M is one of Cr and Nb) . Fig. 16 shows thermal expansion characteristics of Ti₂₋ₓMₓO₃ (M is one of Si and Al). In both Fig. 15 and Fig. 16, the vertical axis represents a length change ΔL/L with reference to the length L at 300K. The length change was calculated by using a linear thermal expansion coefficient α calculated by using a laser thermal expansion meter (LIX-2:N from ULVAC, Inc.) (measurement temperature range 100-700K).

As shown in Fig. 15 and Fig. 16, Ti₂₋ₓMₓO₃ (M is one of Cr, Nb, Si and Al) exhibits negative thermal expansion in a temperature range 400-600K.

In this embodiment, Cr, Nb, Si, and Ai are described by way of example as elements to replace Ti. It will be expected, however, negative thermal expansion will also be exhibited when a portion of Ti is replaced by an element such as Mg, V, Mn, Fe, Co, Ni, Cu, Zn, Ga, Ge, Zr, Mo, Ag, In, Sn, Sb, La, Ta, W, and Bi.

As described above, the negative thermal expansion material according to this embodiment is an oxide sintered object represented by a general formula (3) Ti₂₋ₓMₓO₃ (M includes at least one element selected from Mg, Al, Si, V, Cr, Mn, Fe, Co, Ni, Cu, Zn, Ga, Ge, Zr, Nb, Mo, Ag, In, Sn, Sb, La, Ta, W, and Bi, wherein 0≤x<2 is met). Accordingly, it is possible to provide a novel inexpensive negative thermal expansion material.

### [Seventh embodiment]

A description will be given of the color of the negative thermal expansion material represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met).

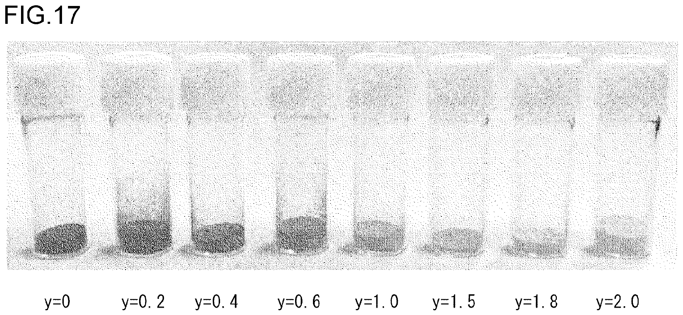

Fig. 17 shows colors of Cu_{1.8}Zn_{0.2}V_{2-y}P_{y}O₇, which is a negative thermal expansion material according to this embodiment. The color of the negative thermal expansion material Cu_{1.8}Zn_{0.2}V_{2-y}P_{y}O₇ in which R=Zn, x=0.2 in the general formula (1) can be changed to, for example, red ocher (y=0), orange (y=0.6), yellow (y=1.0), greenish yellow (y=1.5), light green (y=1.8) and aqua (y=2.0) by changing y from 0 to 2.0. The solid-to-solution ratio (y) of vanadium and phosphorus can be varied as desired so that a negative thermal expansion material having any of desired colors in between the colors shown in the figure can be manufactured. Thus, the color of the negative thermal expansion material represented by the general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) can be varied by changing y and so can be used to control thermal expansion of a paint etc.

Described above is an explanation of the present disclosure based on the embodiment. The embodiments are intended to be illustrative only and it will be understood by those skilled in the art that various modifications to combinations of constituting elements and processes are possible and that such modifications are also within the scope of the present disclosure.

To generalize the embodiments described above, the following technical ideas are derived.

(First aspect) A negative thermal expansion material that includes an oxide represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met).

(Second aspect) The negative thermal expansion material according to the first aspect, wherein a linear thermal expansion coefficient of the oxide at 400K is -10 ppm/K or lower.

(Third aspect) The negative thermal expansion material according to the first aspect or the second aspect, wherein x in the general formula (1) is 0.1-1.6.

(Fourth aspect) The negative thermal expansion material according to any one of the first aspect through the third aspect, wherein y in the general formula (1) is 0.1-1.8.

(Fifth aspect) The negative thermal expansion material according to any one of the first aspect through the fourth aspect, wherein the oxide includes a monoclinic β phase.

(Sixth aspect) The negative thermal expansion material according to any one of the first aspect through the fourth aspect, wherein at least one of an oxide having a monoclinic crystal system or an oxide having an orthorhombic crystal system is included.

(Seventh aspect) The negative thermal expansion material according to the sixth aspect, wherein the oxide has a crystal structure having a space group selected from C2/c, C2/m, and Fdd2.

(Eighth aspect) The negative thermal expansion material according to any one of the first aspect through the seventh aspect, wherein the negative thermal expansion material exhibits negative thermal expansion in a temperature range 100-500K.

(Ninth aspect) The negative thermal expansion material according to any one of the first aspect through the eighth aspect, wherein a linear thermal expansion coefficient is -10 ppm/K or lower in a temperature range 100-500K.

(Tenth aspect) A negative thermal expansion material that includes an oxide represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded) .

(Eleventh aspect) The negative thermal expansion material according to the tenth aspect, wherein x in the general formula (2) is 0.1-1.6.

(Twelfth aspect) The negative thermal expansion material according to the tenth aspect or the eleventh aspect, wherein y in the general formula (2) is 0.1-1.6.

(Thirteenth aspect) The negative thermal expansion material according to any one of the tenth aspect through the twelfth aspect, wherein the negative thermal expansion material exhibits negative thermal expansion in a temperature range 200-400K.

(Fourteenth aspect) The negative thermal expansion material according to any one of the tenth aspect through the thirteenth aspect, wherein a linear thermal expansion coefficient is -10 ppm/K or lower in a temperature range 200-400K.

(Fifteenth aspect) A negative thermal expansion material that includes an oxide represented by a general formula (3) Ti₂₋ₓMₓO₃ (M includes at least one element selected from Mg, Al, Si, V, Cr, Mn, Fe, Co, Ni, Cu, Zn, Ga, Ge, Zr, Nb, Mo, Ag, In, Sn, Sb, La, Ta, W, and Bi, wherein 0≤x<2 is met).

(Sixteenth aspect) The negative thermal expansion material according to the fifteenth aspect, wherein x in the general formula (3) meets 0<x≤1.6.

(Seventeenth aspect) The negative thermal expansion material according to the fifteenth aspect or the sixteenth aspect, wherein the negative thermal expansion material exhibits negative thermal expansion in a temperature range 100-500K.

(Eighteenth aspect) The negative thermal expansion material according to any one of the fifteenth aspect through the seventeenth aspect, wherein a linear thermal expansion coefficient is -10 ppm/K or lower in a temperature range 100-500K.

(Nineteenth aspect) A composite material including: the negative thermal expansion material according to any one of the first aspect through the eighteenth aspect; and a positive thermal expansion material having a positive linear thermal expansion coefficient.

(Twentieth aspect) A method of manufacturing a negative thermal expansion material comprising: preparing an aqueous solution that contains a chemical compound material represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) and contains an organic acid.

(Twenty-first aspect) A method of manufacturing a negative thermal expansion material comprising: preparing an aqueous solution that contains a chemical compound material represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded) and contains an organic acid.

(Twenty-second aspect) A component including: the negative thermal expansion material according to any one of the first aspect through the eighteenth aspect; or a composite material including the negative thermal expansion material according to any one of the first aspect through the eighteenth aspect and a positive thermal expansion material having a positive linear thermal expansion coefficient.

(Twenty-third aspect) The negative thermal expansion material according to any one of the first aspect through the ninth aspect, wherein a color of the negative thermal expansion material is changed by changing y in the general formula (1).

### [INDUSTRIAL APPLICABILITY]

The oxide represented by one of the general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met), the general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded), and the general formula (3) Ti₂₋ₓMₓO₃ (M includes at least one element selected from Mg, Al, Si, V, Cr, Mn, Fe, Co, Ni, Cu, Zn, Ga, Ge, Zr, Nb, Mo, Ag, In, Sn, Sb, La, Ta, W, and Bi, wherein 0≤x<2 is met) can be used as a thermal expansion suppressor that cancels and suppresses thermal expansion exhibited by an ordinary material. Further, a zero-thermal expansion material that does not expand either positively or negatively in a particular temperature range can also be produced.

More specifically, the material can be used in precision optical components and mechanical components, process equipment and tools, temperature compensating members for fiber grating, printed circuit boards, encapsulation members for electronic components, thermal switches, refrigerator components, artificial satellite components, etc. in which variation in shape or size with temperature should be avoided. Particularly, by formulating a composite material in which a negative thermal expansion material is diffused in a matrix phase of resin having a large positive thermal expansion coefficient, it is possible to suppress and control thermal expansion even in the resin material, and so applications are found in various usages.

## Claims

1. A negative thermal expansion material that includes an oxide represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) .

2. The negative thermal expansion material according to claim 1, wherein
a linear expansion thermal coefficient of the oxide at 400K is -10 ppm/K or lower.

3. The negative thermal expansion material according to claim 1 or 2, wherein
x in the general formula (1) is 0.1-1.6.

4. The negative thermal expansion material according to any one of claims 1 through 3, wherein
y in the general formula (1) is 0.1-1.8.

5. The negative thermal expansion material according to any one of claims 1 through 4, wherein
the oxide includes a monoclinic β phase.

6. The negative thermal expansion material according to any one of claims 1 through 4, wherein
at least one of an oxide having a monoclinic crystal system or an oxide having an orthorhombic crystal system is included.

7. The negative thermal expansion material according to claim 6, wherein
the oxide has a crystal structure having a space group selected from C2/c, C2/m, and Fdd2.

8. The negative thermal expansion material according to any one of claims 1 through 7, wherein
the negative thermal expansion material exhibits negative thermal expansion in a temperature range 100-500K.

9. The negative thermal expansion material according to any one of claims 1 through 8, wherein
a linear thermal expansion coefficient is -10 ppm/K or lower in a temperature range 100-500K.

10. A negative thermal expansion material that includes an oxide represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded).

11. The negative thermal expansion material according to claim 10, wherein
x in the general formula (2) is 0.1-1.6.

12. The negative thermal expansion material according to claim 10 or 11, wherein
y in the general formula (2) is 0.1-1.6.

13. The negative thermal expansion material according to any one of claims 10 through 12, wherein
the negative thermal expansion material exhibits negative thermal expansion in a temperature range 200-400K.

14. The negative thermal expansion material according to any one of claims 10 through 13, wherein
a linear thermal expansion coefficient is -10 ppm/K or lower in a temperature range 200-400K.

15. A negative thermal expansion material that includes an oxide represented by a general formula (3) Ti₂₋ₓMₓO₃ (M includes at least one element selected from Mg, Al, Si, V, Cr, Mn, Fe, Co, Ni, Cu, Zn, Ga, Ge, Zr, Nb, Mo, Ag, In, Sn, Sb, La, Ta, W, and Bi, wherein 0≤x<2 is met).

16. The negative thermal expansion material according to claim 15, wherein
x in the general formula (3) meets 0<x≤1.6.

17. The negative thermal expansion material according to claim 15 or 16, wherein
the negative thermal expansion material exhibits negative thermal expansion in a temperature range 100-500K.

18. The negative thermal expansion material according to any one of claims 15 through 17, wherein
a linear thermal expansion coefficient is -10 ppm/K or lower in a temperature range 100-500K.

19. A composite material comprising:
the negative thermal expansion material according to any one of claims 1 through 18; and
a positive thermal expansion material having a positive linear thermal expansion coefficient.

20. A method of manufacturing a negative thermal expansion material comprising: preparing an aqueous solution that contains a chemical compound material represented by a general formula (1) Cu₂₋ₓRₓV_{2-y}P_{y}O₇ (R includes at least one element selected from Mg, Al, Si, Ti, Cr, Mn, Fe, Co, Ni, Zn, and Sn, wherein 0≤x≤2, 0<y<2 are met) and contains an organic acid.

21. A method of manufacturing a negative thermal expansion material comprising: preparing an aqueous solution that contains a chemical compound material represented by a general formula (2) Zn₂₋ₓTₓP_{2-y}A_{y}O₇ (T includes at least one element selected from Mg, Al, Si, Ti, V, Cr, Mn, Fe, Co, Ni, Cu, Ga, Ge, Zr, Nb, Mo, Ag, In, Sn, Sb, La, Ta, W, and Bi, A includes at least one element selected from Al, Si, V, Ge, and Sn, wherein 0≤x<2, 0≤y≤2 are met except that (x,y)=(0,0) and (0,2) are excluded) and contains an organic acid.

22. A component comprising:
the negative thermal expansion material according to any one of claims 1 through 18; or
a composite material including the negative thermal expansion material according to any one of claims 1 through 18 and a positive thermal expansion material having a positive linear thermal expansion coefficient.

23. The negative thermal expansion material according to any one of claims 1 through 9, wherein
a color of the negative thermal expansion material is changed by changing y in the general formula (1).
